(19)

**Europäisches Patentamt**
**European Patent Office**
**Office européen des brevets**

(11) **EP 2 840 823 A1**

(12) **EUROPEAN PATENT APPLICATION**
published in accordance with Art. 153(4) EPC

(43) Date of publication:
**25.02.2015 Bulletin 2015/09**

(51) Int Cl.:
*H04W 16/00* (2009.01)

(21) Application number: **12874803.5**

(22) Date of filing: **20.04.2012**

(86) International application number:
**PCT/CN2012/074449**

(87) International publication number:
**WO 2013/155704 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **WU, Lianhai**
**Beijing 100025 (CN)**

• **CHANG, Ningjuan**
**Beijing 100025 (CN)**
• **WANG, Weiwei**
**Beijing 100025 (CN)**
• **XU, Haibo**
**Beijing 100025 (CN)**

(74) Representative: **Ward, James Norman**
**Haseltine Lake LLP**
**Lincoln House, 5th Floor**
**300 High Holborn**
**London WC1V 7JH (GB)**

(54) **POWER ADAPTATION METHOD AND DEVICE IN HETEROGENEOUS NETWORK**

(57) Embodiments of the present invention provide a power adaptive method and apparatus in a heterogeneous network. The method includes: receiving, by a pico base station, reference signal received power of a serving base station and a neighboring base station reported by multiple pieces of user equipment (UE) within its coverage; calculating, by the pico base station, an average value of data received power of the UE and an average value of the reference signal received power of the UE for receiving reference signal transmitted by the macro base station according to the reference signal received power; and transmitting the above calculation result by the pico base station to the macro base station, so that the macro base station determines transmitted power of a unicast physical channel in an almost blank subframe configured by the macro base station for the pico base station accordingly. With the method and apparatus of the embodiments of the present invention, the throughput of the system is optimized, and interference of downlink transmission of the macro base station to UE of the pico base station is alleviated.

201
receiving, by a pico base station, measurement values reported by multiple pieces of UE within its coverage

202
calculating, by the pico base station, an average value of data received power of the UE and an average value of the reference signal received power of the UE for receiving reference signal transmitted by the macro base station according to the measurement values

203
transmitting by the pico base station to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station

FIG.2

EP 2 840 823 A1

## Description

Technical Field

The present invention relates to the field of communications, and in particular to a power adaptive method and apparatus in a heterogeneous network.

Background

A long-term evolution (LTE) scheme of 3GPP (third generation partnership project) follows a conventional homogeneous network, which consists of a hexagonal cellular system. For further increasing the capacity of the system, a heterogeneous network is introduced into a long-term evolution-advanced (LTE-A) scheme of a next generation wireless communication system. In the heterogeneous network, an LTE-A system consists of a macro cell, a femto cell, a pico cell, a remote radio head, and a relay. It not only is improved with respect to the capacity of the system by deploying with a new radio node, but also provides better services to users in special regions, thereby optimizing the performance of the system.

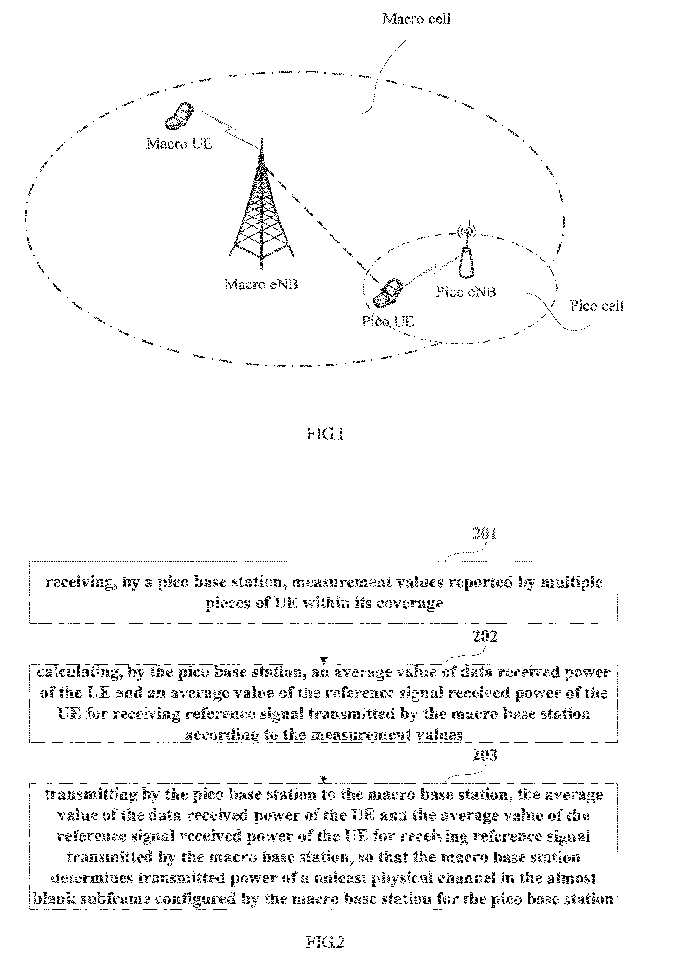

However, in a heterogeneous scenario where a macro cell and a pico cell coexist, as shown in Fig. 1, if a pico base station (pico eNB) employs a coverage expansion technology, intense interference will be brought by downlink transmission of a macro base station to downlink transmission of the pico base station. Currently, downlink interference brought by the macro base station to user equipment (UE) of the pico base station (pico UE) is alleviated by configuring a downlink almost blank subframe (ABS) by the macro base station (macro eNB). The ABS refers to a subframe transmitting a signal in a manner of lowering power.

In the implementation of the present invention, the inventors found that in an ABS, important broadcast information such as primary and secondary synchronization signals, and system information, etc. is transmitted still at normal power, so as to achieve a coverage target. Signal whose power needs to be lowered is a unicast channel transmitting UE data. However, in transmitting data, if the UE data are transmitted always at fixed power, the throughput of the system will not be optimized. Therefore, there is a need for a power adaptive technology to solve such a problem.

It should be noted that the above description of the background is merely provided for clear and complete explanation of the present invention and for easy understanding by those skilled in the art. And it should not be understood that the above technical solution is known to those skilled in the art as it is described in the background of the present invention.

Summary

An object of the embodiments of the present invention is to provide a power adaptive method and apparatus in a heterogeneous network, so as to optimize the throughput of the system, and alleviate interference of downlink transmission of a macro base station to UE of a pico base station.

According to one aspect of the embodiments of the present invention, there is provided a power adaptive method in a heterogeneous network, including:

receiving, by a pico base station, measurement values reported by multiple pieces of UE within its coverage, the measurement values including reference signal received power of each piece of the UE for receiving reference signal transmitted by the pico base station and reference signal received power of each piece of the UE for receiving reference signal transmitted by a macro base station; wherein the macro base station configures the pico base station with an almost blank subframe;

calculating an average value of data received power of the UE by the pico base station according to the reference signal received power of each piece of the UE for receiving reference signal transmitted by the pico base station, and calculating an average value of the reference signal received power of the UE for receiving reference signal transmitted by the macro base station according to the reference signal received power of each piece of the UE for receiving reference signal transmitted by the macro base station; and

transmitting, by the pico base station to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station.

According to one aspect of the embodiments of the present invention, there is provided a power adaptive method in a heterogeneous network, including:

receiving, by a macro base station, an average value of data received power of multiple pieces of UE within a coverage of a pico base station transmitted by the pico base station, and an average value of reference signal received power of the UE for receiving the reference signals transmitted by the macro base station;

calculating an average pathloss from the macro base station to edge UE of the pico base station according to the average value of the reference signal received power of the UE for receiving the reference signals transmitted by the macro base station and transmitted power of common reference signal of the macro base station; and

determining transmitted power of a unicast physical channel in an almost blank subframe configured for the pico base station according to the average pathloss from the macro base station to the edge UE of the pico base station and the average value of data received power of the UE.

According to one aspect of the embodiments of the present invention, there is provided a pico base station, including:

a receiving unit configured to receive measurement values reported by multiple pieces of UE within a coverage of the pico base station, the measurement values including reference signal received power of each piece of the UE for receiving reference signal transmitted by the pico base station and reference signal received power of each piece of the UE for receiving reference signal transmitted by a macro base station, wherein the macro base station configures the pico base station with an almost blank subframe;
a calculating unit configured to calculate an average value of data received power of the UE according to the reference signal received power of each piece of the UE for receiving reference signal transmitted by the pico base station, and calculate an average value of the reference signal received power of the UE for receiving reference signal transmitted by the macro base station according to the reference signal received power of each piece of the UE for receiving reference signal transmitted by the macro base station; and
a transmitting unit configured to transmit to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station.

According to one aspect of the embodiments of the present invention, there is provided a macro base station, including:

a receiving unit configured to receive an average value of data received power of multiple pieces of UE within a coverage of a pico base station transmitted by the pico base station, and an average value of reference signal received power of the UE for receiving the reference signal transmitted by the macro base station;
a calculating unit configured to calculate an average pathloss from the macro base station to edge UE of the pico base station according to the average value of the reference signal received power of the UE for receiving the reference signal transmitted by the macro base station and transmitted power of common reference signal of the macro base station; and
a determining unit configured to determine transmitted power of a unicast physical channel in an almost blank subframe configured for the pico base station according to the average pathloss from the macro base station to the edge UE of the pico base station and the average value of data received power of the UE.

According to one aspect of the embodiments of the present invention, there is provided a power adaptive method in a heterogeneous network, including:

receiving, by a pico base station, measurement values reported by multiple pieces of UE within its coverage, the measurement values including reference signal received quality of each piece of the UE in receiving reference signal transmitted by the pico base station;
calculating, an average value of the reference signal received quality of the UE in receiving reference signal transmitted by the pico base station according to the reference signal received quality of each piece of the UE in receiving reference signal transmitted by the pico base station;
determining whether the UE is subjected to intense interference from a macro base station by the pico base station according to the average value of the reference signal received quality; and
transmitting, by the pico base station to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information.

According to one aspect of the embodiments of the present invention, there is provided a power adaptive method in a heterogeneous network, including:

receiving, by a macro base station, interference indication information transmitted by a pico base station, the interference indication information being used for indicating whether multiple pieces of UE of the pico base station are subjected to intense interference from the macro base station; and
determining, by the macro base station, an adjustment scheme of transmitted power of a unicast physical channel in an almost blank subframe configured by the macro base station for the pico base station, according to the interference indication information.

According to one aspect of the embodiments of

the present invention, there is provided a pico base station, including:

a receiving unit configured to receive measurement values reported by multiple pieces of UE within a coverage of the pico base station, the measurement values including reference signal received quality of each piece of the UE in receiving reference signal transmitted by the pico base station;
a calculating unit configured to calculate an average value of the reference signal received quality of the UE in receiving reference signal transmitted by the pico base station according to the reference signal received quality of each piece of the UE in receiving reference signal transmitted by the pico base station;
a determining unit configured to determine whether the UE is subjected to intense interference from a macro base station according to the average value of the reference signal received quality; and
a transmitting unit configured to transmit to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information.

According to one aspect of the embodiments of the present invention, there is provided a macro base station, including:

a receiving unit configured to receiving interference indication information transmitted by a pico base station, the interference indication information being used for indicating whether multiple pieces of UE of the pico base station are subjected to intense interference from the macro base station; and
a determining unit configured to determine an adjustment scheme of transmitted power of a unicast physical channel in an almost blank subframe configured by the macro base station for the pico base station, according to the interference indication information received by the receiving unit.

According to one aspect of the embodiments of the present invention, there is provided a computer-readable program, wherein when the program is executed in a base station, the program enables a computer to carry out the power adaptive method in a heterogeneous network as described above in the base station.

According to one aspect of the embodiments of the present invention, there is provided a storage medium in which a computer-readable program is stored, wherein the computer-readable program enables a computer to carry out the power adaptive method in a heterogeneous network as described above in a base station.

An advantage of the embodiments of the present invention resides in that with the method and apparatus of the embodiments of the present invention, the throughput of the system is optimized, and interference of downlink transmission of the macro base station to the UE of the pico base station is alleviated.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:

Figure 1 is a schematic diagram of a heterogeneous scenario where a macro cell and a pico cell coexist;
Figure 2 is a flowchart of a power adaptive method (a pico base station) in a heterogeneous network of an embodiment of the present invention;
Figure 3 is a flowchart of calculating an average value of data received power of UE in the embodiment shown in Fig. 2;
Figure 4 is a flowchart of a power adaptive method (a macro base station) in a heterogeneous network of an embodiment of the present invention;
Figure 5 is a schematic diagram of the structure of a pico base station of an embodiment of the present invention;

Figure 6 is a schematic diagram of the structure of a macro base station of an embodiment of the present invention;

Figure 7 is a flowchart of a power adaptive method (a pico base station) in a heterogeneous network of another embodiment of the present invention;

Figure 8 is a flowchart of a power adaptive method (a macro base station) in a heterogeneous network of another embodiment of the present invention;

Figure 9 is a flowchart of determining an adjustment scheme of transmitted power of a unicast physical channel in the embodiment shown in Fig. 8;

Figure 10 is a schematic diagram of the structure of a pico base station of another embodiment of the present invention; and

Figure 11 is a schematic diagram of the structure of a macro base station of another embodiment of the present invention.

Detailed Description

Various embodiments of the present invention are described as follows with reference to the drawings. These embodiments are illustrative only, and are not intended to limit the present invention. For the principle and implementation modes of the present invention to be easily understood by those skilled in the art, the implementation modes of the present invention shall be described taking a power adaptive method in a heterogeneous network as an example. In the following description, a macro eNB in a heterogeneous network is taken as an example of a macro base station, and a pico eNB in a heterogeneous network is taken as an example of a pico base station. However, it should be understood that the embodiments of the present invention are not limited thereto, and are applicable to other scenarios related to power adaptation.

Embodiment 1

An embodiment of the present invention provides a power adaptive method in a heterogeneous network. Fig. 2 is a flowchart of the method. Referring to Fig. 2, the method includes:

step 201: receiving, by a pico base station, measurement values reported by multiple pieces of user equipment (UE) within its coverage, the measurement values including reference signal received power of each piece of the UE for receiving reference signal transmitted by the pico base station ($RSRP_S$) and reference signal received power of each piece of the UE for receiving reference signal transmitted by a macro base station ($RSRP_N$); wherein the macro base station configures the pico base station with an almost blank subframe.

In this embodiment, the pico base station first performs measurement configuration to UEs subjected to intense interference within its coverage, so that these pieces of UE performs corresponding actions according to the measurement configuration, such as power measurement, and measurement result report, etc.

In this embodiment, these pieces of UE (pico UE) reports measurement values of its serving base station and neighboring base station according to the measurement configuration. In this embodiment, the measurement values refer to reference signal received power (RSRP) values. Wherein, RSRP of the serving base station is denoted by $RSRP_S$, referring to the reference signal received power of the UE for receiving reference signal transmitted by the serving base station, and RSRP of the neighboring base station is denoted by $RSRP_N$, referring to the reference signal received power of the UE for receiving reference signal transmitted by the neighboring base station.

Wherein, the serving base station here refers to the pico base station of the embodiments of the present invention, and the neighboring base station refers to a macro base station allocating an almost blank subframe for the pico base station.

Wherein, the macro base station allocating an almost blank subframe for the pico base station may be multiple, and in this embodiment, there being only one macro base station is taken as an example. However, it should be understood that when there are multiple such macro base stations, power adaptation may still be performed according to the method of the embodiment of the present invention or a variant thereof, and such a method or variant is also covered by the protection scope of the present invention.

Step 202: calculating, by the pico base station, an average value of data received power of the UE according to the reference signal received power ($RSRP_S$) of each piece of the UE for receiving reference signal transmitted by the pico base station, and calculating an average value of the reference signal received power of the UE for receiving reference signal transmitted by the macro base station according to the reference signal received power ($RSRP_N$) of each piece of the UE for receiving reference signal transmitted by the macro base station.

In this embodiment, after the pico base station receives the above measurement values ($RSRP_S$ and $RSRP_N$) reported by the multiple pieces of UE within its coverage, the pico base station may calculate the average value of the data received power of these pieces of UE and the average value of the $RSRP_N$ according to the measurement values.

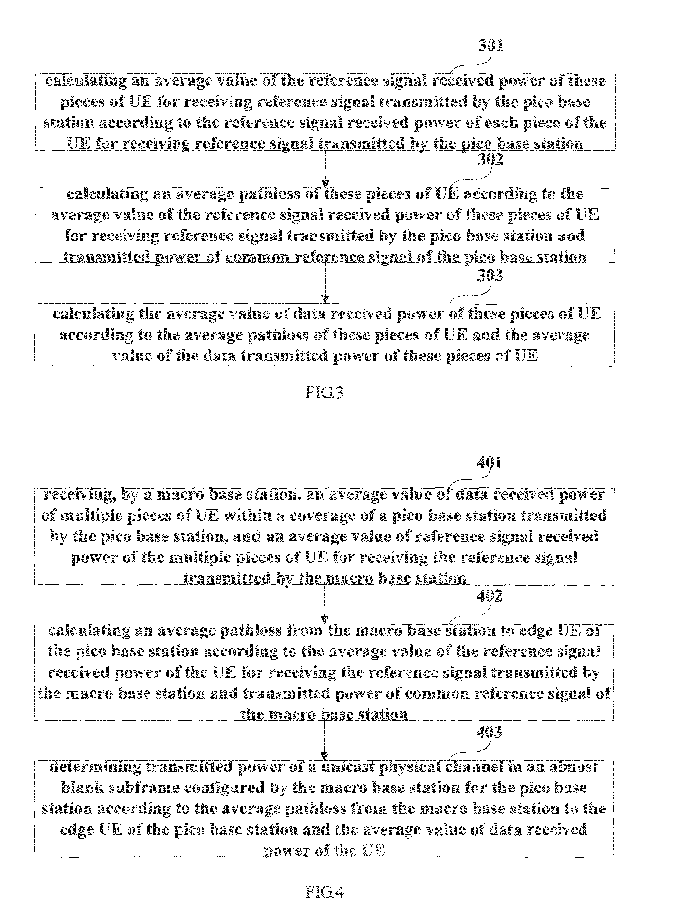

In step 202, the calculating the average value of the data received power of the UE may be carried out by a method shown in Fig. 3. Referring to Fig. 3, the method includes:

step 301: calculating an average value of the reference signal received power of these pieces of UE for receiving reference signal transmitted by the pico base station according to the reference signal received power ($RSRP_S$) of each piece of the UE for receiving reference signal transmitted by the pico base station;

in step 301, calculating an average value of the $RSRP_S$ is to average the $RSRP_S$ reported by these pieces of UE; for example, assuming that n pieces of UE report $RSRP_S$ and $RSRP_N$, the average value of the $RSRP_S$ is:

$$\overline{RSRP_S}=\frac{1}{n}\sum_{i=1}^{n}\left(RSRP_S(i)\right);$$

step 302: calculating an average pathloss of these pieces of UE according to the average value of the reference signal received power of these pieces of UE for receiving reference signal transmitted by the pico base station and transmitted power of common reference signal of the pico base station;

in step 302, transmitted power of a common reference signal (CRS) of the pico base station itself is known, and the average pathloss of the UE at its serving cell (a pico cell) may be obtained by subtracting the average value of the $RSRP_S$ from the transmitted power, that is,

$$\overline{PL_S}=\overline{P_{RS\_S}}-\overline{RSRP_S};$$

where, $P_{RS\_S}$ is the transmitted power of the common reference signal of the pico base station, and $\overline{PL_S}$ is the average pathloss of these pieces of UE at their serving cell;

step 303: calculating the average value of data received power of these pieces of UE according to the average pathloss of these pieces of UE and the average value of the data transmitted power of these pieces of UE;

in step 303, the data transmitted power of these pieces of UE at their serving cell is known to the pico base station, and the average value of data received power of these pieces of UE may be obtained by subtracting the average pathloss of these pieces of UE from the average value of data transmitted power of these pieces of UE, that is,

$$\overline{P_{S\_rx}}=\overline{P_{S\_tx}}-\overline{PL_S};$$

where, $\overline{P_{S\_tx}}$ is the average value of data transmitted power of these pieces of UE at their serving cell, and $\overline{P_{S\_rx}}$ is the average value of data received power of these pieces of UE.

In step 202, calculating an average value of the $RSRP_N$ is to average the $RSRP_N$ reported by these pieces of UE; for example, assuming also that n pieces of UE report $RSRP_S$ and $RSRP_N$, the average value of the $RSRP_N$ is:

$$\overline{RSRP_N}=\frac{1}{n}\sum_{i=1}^{n}\left(RSRP_N(i)\right).$$

Step 203: transmitting by the pico base station to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station.

In this embodiment, the pico base station may transmit the average value $\overline{P_{S\_rx}}$ of the data received power of the UE at the serving cell and the reference signal received power $\overline{RSRP_N}$ of the UE for receiving reference signal transmitted by the macro base station to the macro base station via an X2 interface. And the macro base station may determine the downlink transmitted power of the unicast physical channel in the almost blank subframe configured by it for the pico base station according to these two values, so as to avoid interference brought by its downlink transmission to the pico UE.

Wherein, a method for determining by a macro base station downlink transmitted power of a unicast physical channel in an almost blank subframe configured by the macro base station for a pico base station shall be explained in a following embodiment.

With the method of this embodiment, the pico base station calculates the average value of the data received power of these pieces of the UE and the average value of the reference signal received power of these pieces of the UE for receiving reference signal transmitted by the macro base station according to the measurement values reported by the multiple pieces of UE within its coverage, and transmits these average values to the macro base station, so that the macro base station determines the downlink transmitted power of the unicast physical channel in the almost blank subframe configured by it for the pico base station according to these information, thereby avoiding interference brought by its downlink transmission to the pico UE, and achieving an effect of power adaptation.

Embodiment 2

An embodiment of the present invention provides a power adaptive method in a heterogeneous network. Fig. 4 is a flowchart of the method. Referring to Fig. 4, the method includes:

step 401: receiving, by a macro base station, an average value of data received power of multiple pieces of UE within a coverage of a pico base station transmitted by the pico base station, and an average value of reference signal received power of the multiple pieces of UE for receiving the reference signal transmitted by the macro base station;

in step 401, following the example of Embodiment 1, the average value of the data received power of the multiple pieces of UE is denoted by $\overline{P_{S\_rx}}$, and the average value of the reference signal received power of the multiple pieces UE for receiving reference signal transmitted by the macro base station is denoted by $\overline{RSRP_N}$;

step 402: calculating an average pathloss from the macro base station to edge UE of the pico base station according to the average value of the reference signal received power of the UE for receiving the reference signal transmitted by the macro base station and transmitted power of common reference signal of the macro base station;

in step 402, the macro base station may learn the average pathloss from the macro base station to the edge UE of a pico cell to which the pico base station corresponds according to the received $\overline{RSRP_N}$, that is,

$$\overline{PL_N} = P_{RS\_N} - \overline{RSRP_N}\ ;$$

where, $P_{RS\_N}$ is the transmitted power of the common reference signal (CRS) of the macro base station, which is known to the macro base station, and $\overline{PL_N}$ is the average pathloss from the macro base station to the pico cell edge UE of the pico base station;

step 403: determining transmitted power of a unicast physical channel in an almost blank subframe configured by the macro base station for the pico base station according to the average pathloss from the macro base station to the edge UE of the pico base station and the average value of data received power of the UE;

in step 403, the maximum transmitted power of the unicast physical channel in the almost blank subframe configured for the pico base station by the macro base station may be determined according to a signal to noise ratio formula.

Wherein, the signal to noise ratio formula is

$$\frac{\overline{P_{S\_rx}}}{P_{N\_tx} - \overline{PL_N}} \geq \alpha_0\ ;\ \text{where, } P_{N\_tx} \text{ is the transmitted power}$$

of the unicast physical channel, $\overline{PL_N}$ is the average pathloss from the macro base station to the edge UE of the pico base station, $\overline{P_{S\_rx}}$ is the average value of the data received power of the UE, and $\alpha_0$ is a predefined proportion factor, which may be an empirical value.

Hence, it may be obtained therefrom that:

$$P_{N\_tx} \leq \overline{PL_N} + \alpha_0 \overline{P_{S\_rx}}\ .$$

Therefore, the maximum transmitted power of the unicast physical channel in the almost blank subframe of the macro base station is $\overline{PL_N} + \alpha_0 \overline{P_{S\_rx}}$.

With the method of this embodiment, after receiving the average value of the data received power of multiple pieces of UE within the coverage of the pico base station transmitted by the pico base station and the average value of the reference signal received power of the UE for receiving reference signal transmitted by the macro base station, the macro base station may determine the downlink transmitted power of the unicast physical channel in the almost blank subframe configured for the pico base station by the macro base station according to a signal to noise ratio formula and the above information, thereby avoiding interference brought by its downlink transmission to the pico UE, and achieving an effect of power adaptation.

An embodiment of the present invention further provides a pico base station, as described in Embodiment 3 below. As the principle of the pico base station for solving problems is similar to that of the method of Embodiment 1, the implementation of the method of Embodiment 1 may be referred to for the implementation of the pico base station, and the identical contents shall not be described any further.

Embodiment 3

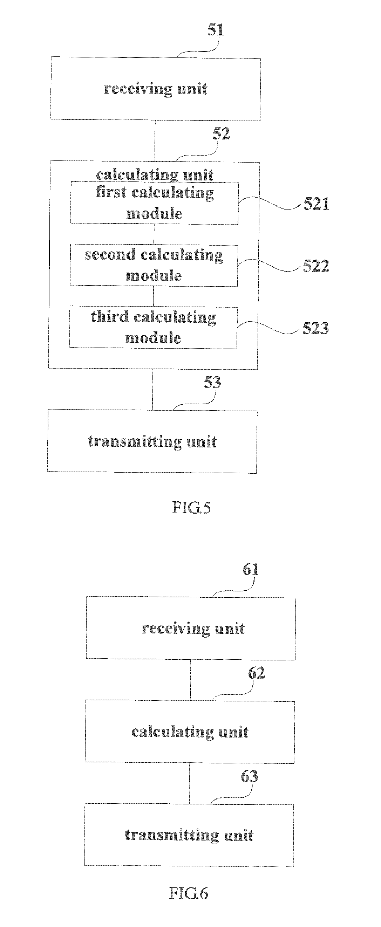

An embodiment of the present invention further provides a pico base station. Fig. 5 is a schematic diagram of the structure of the pico base station. Referring to Fig. 5, the pico base station includes:

a receiving unit 51 configured to receive measurement values reported by multiple pieces of UE within a coverage of the pico base station, the measurement values including reference signal received power of each piece of the UE for receiving reference signal transmitted by the pico base station and reference signal received power of each piece of the UE for receiving reference signal transmitted by a macro base station, wherein the macro base station configures the pico base station with an almost blank subframe;

a calculating unit 52 configured to calculate an average value of data received power of the UE according to the reference signal received power of each piece of the UE for receiving reference signal transmitted by the pico base station, and calculate an average value of the reference signal received power of the UE for receiving reference signal transmitted by the macro base station according to the reference signal received power of each piece of the UE for receiving reference signal transmitted by a macro base station; and

a transmitting unit 53 configured to transmit the average value of the data received power of the UE and the average value of the reference signal received power of the UE for receiving reference signal transmitted by the macro base station to the macro base station, so that the macro base station determines transmitted power of a unicast physical channel in the almost blank subframe configured by the macro base station for the pico base station.

In an embodiment, the calculating unit 52 includes:

a first calculating module 521 configured to calculate an average value of the reference signal received power of the UE for receiving reference signal transmitted by the pico base station according to the reference signal received power of each piece of the UE for receiving reference signal transmitted by the pico base station;

a second calculating module 522 configured to calculate an average pathloss of the UE according to the average value of the reference signal received power of the UE for receiving reference signal transmitted by the pico base station and transmitted power of common reference signal of the pico base station; and

a third calculating module 523 configured to calculate the average value of data received power of the UE according to the average pathloss of the UE and the average value of the data transmitted power of the UE.

The pico base station of this embodiment calculates the average value of data received power of the UE and the average value of the reference signal received power of the UE for receiving reference signal transmitted by the macro base station according to the measurement values reported by the multiple pieces of UE within its coverage, and transmits the average values to the macro base station, so that the macro base station determines the downlink transmitted power of a unicast physical channel in the almost blank subframe configured by the macro base station for the pico base station according to the information, thereby avoiding interference brought by its downlink transmission to the pico UE, and achieving an effect of power adaptation.

An embodiment of the present invention further provides a macro base station, as described in Embodiment 4 below. As the principle of the macro base station for solving problems is similar to that of the method of Embodiment 2, the implementation of the method of Embodiment 2 may be referred to for the implementation of the macro base station, and the identical contents shall not be described any further.

Embodiment 4

An embodiment of the present invention further provides a macro base station. Fig. 6 is a schematic diagram of the structure of the macro base station. Referring to Fig. 6, the macro base station includes:

a receiving unit 61 configured to receive an average value of data received power of multiple pieces of UE within a coverage of a pico base station transmitted by the pico base station, and an average value of reference signal received power of the UE for receiving the reference signal transmitted by the macro base station;

a calculating unit 62 configured to calculate an average pathloss from the macro base station to edge UE of the pico base station according to the average value of the reference signal received power of the UE for receiving the reference signal transmitted by the macro base station and transmitted power of common reference signal of the macro base station; and

a determining unit 63 configured to determine transmitted power of a unicast physical channel in an almost blank subframe configured for the pico base station according to the average pathloss from the macro base station to the edge UE of the pico base station and the average value of data received power of the UE.

In an embodiment, the determining unit 63 is configured to determine maximum transmitted power of the unicast physical channel in the almost blank subframe configured for the pico base station according to the following formula:

$$P_{N\_tx} \leq \overline{PL_N} + \alpha_0 \overline{P_{S\_rx}} \; ;$$

where, $P_{N\_tx}$ is the transmitted power of the unicast physical channel, $\overline{PL_N}$ is the average pathloss from the macro base station to the edge UE of the pico base station, $\overline{P_{S\_rx}}$ is the average value of data received power of the UE, and $\alpha_0$ is a predefined comparative factor.

After receiving the average value of the data received power of multiple pieces of UE within the coverage of the pico base station transmitted by the pico base station and the average value of the reference signal received power of the UE for receiving the reference signal transmitted by the macro base station, the macro base station of this embodiment determines the downlink transmitted power of the unicast physical channel in the almost blank subframe configured for the pico base station by it according to a signal to noise ratio formula and the above information, thereby avoiding interference brought by its downlink transmission to the pico UE, and achieving an effect of power adaptation.

Embodiment 5

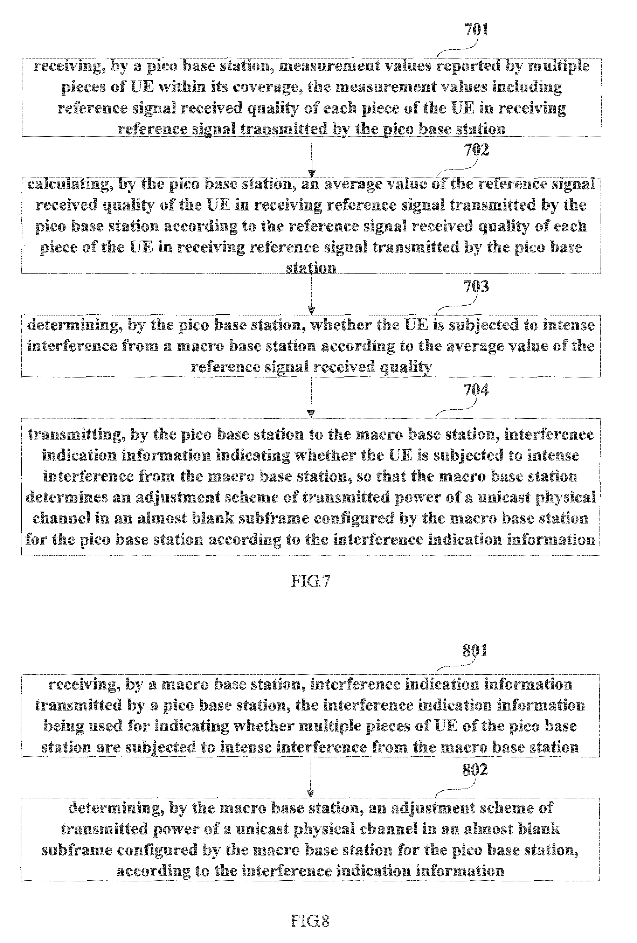

An embodiment of the present invention further provides a power adaptive method in a heterogeneous network. Fig. 7 is a flowchart of the method. Referring to Fig. 7, the method includes:

   step 701: receiving, by a pico base station, measurement values reported by multiple pieces of UE within its coverage, the measurement values including reference signal received quality of each piece of the UE in receiving reference signal transmitted by the pico base station;
   in this embodiment, the pico base station first performs measurement configuration to UEs subjected to intense interference within its coverage, so that these pieces of UE performs corresponding actions according to the measurement configuration, such as quality measurement, and measurement result report, etc;
   in this embodiment, these pieces of UE (pico UE) report measurement values of their serving base stations according to the measurement configuration;
   in this embodiment, the measurement values refer to reference signal received quality (RSRQ); wherein, RSRQ of the serving base station is denoted by $RSRQ_s$, referring to the reference signal received quality of the UE in receiving reference signal transmitted by the serving base station;
   wherein, the serving base station here refers to the pico base station of the embodiments of the present invention;
   step 702: calculating, by the pico base station, an average value of the reference signal received quality of the UE in receiving reference signal transmitted by the pico base station according to the reference signal received quality of each piece of the UE in receiving reference signal transmitted by the pico base station;
   in step 702, the calculating an average value of the

$RSRQ_s$ is to average the $RSRQ_s$ reported by these pieces of UE; for example, assuming that n pieces of UE report $RSRQ_s$, the average value of the $RSRQ_s$ is:

$$\overline{RSRQ_S} = \frac{1}{n} \sum_{i=1}^{n} \left( RSRQ_S(i) \right);$$

step 703: determining, by the pico base station, whether the UE is subjected to intense interference from a macro base station according to the average value of the reference signal received quality;
in step 703, a comparative factor $\alpha_1$ may be preset, and the average value of the reference signal received quality is compared with the comparative factor, so as to determine whether the UE is subjected to intense interference from the macro base station; for example, when the average value of the reference signal received quality is greater than or equal to the comparative factor, it is determined that the UE is subjected to intense interference from the macro base station, that is,
if $\overline{RSRQ_S} \geq \alpha_1$, it is determined that the UE is subjected to intense interference from the macro base station; otherwise it is determined that the UE is not subjected to intense interference from the macro base station;
step 704: transmitting, by the pico base station to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information;
in step 704, after whether the UE is subjected to intense interference from the macro base station is determined in step 703, the pico base station transmits the indication information indicating whether the UE is subjected to intense interference from the macro base station to the macro base station, so that the macro base station determines its power adjustment scheme according to the interference indication information, such as lowering the transmitted power of the unicast physical channel in the almost blank subframe configured by it for the pico base station, or increasing the transmitted power of the unicast physical channel in the almost blank subframe configured by it for the pico base station, or keeping the transmitted power of the unicast physical channel in the almost blank subframe configured by it for the pico base station unchanged; a concrete manner of determination shall be described in an embodiment below;

wherein, the interference indication information may be indicated via 1 bit information; for example, "0" indicates being not subjected to intense interference, and "1" indicates being subjected to intense interference;

wherein, the interference indication information may be transmitted to the macro base station via load information of an X2 interface;

in this embodiment, the indication method and the transmission method of the interference indication information are examples only, and corresponding variants of the methods may be made according to common general knowledge in the art.

With the method of this embodiment, the pico base station judges whether the multiple pieces of UE are subjected to intense interference from the macro base station according to the measurement values reported by the multiple pieces of UE within its coverage and the preset comparative factor, and transmits corresponding interference indication information to the macro base station, so that the macro base station determines an adjustment scheme of the downlink transmitted power of the unicast physical channel in the almost blank subframe configured by it for the pico base station according to the interference indication information, thereby avoiding interference brought by its downlink transmission to the pico UE, and achieving an effect of power adaptation.

Embodiment 6

An embodiment of the present invention further provides a power adaptive method in a heterogeneous network. Fig. 8 is a flowchart of the method. Referring to Fig. 8, the method includes:

step 801: receiving, by a macro base station, interference indication information transmitted by a pico base station, the interference indication information being used for indicating whether multiple pieces of UE of the pico base station are subjected to intense interference from the macro base station; and

step 802: determining, by the macro base station, an adjustment scheme of transmitted power of a unicast physical channel in an almost blank subframe configured by the macro base station for the pico base station, according to the interference indication information.

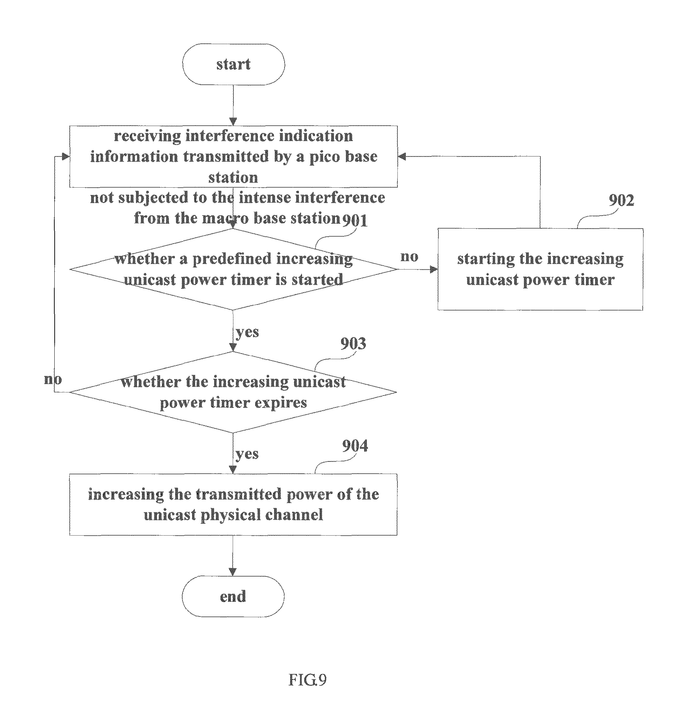

In an embodiment, if the interference indication information is being not subjected to the intense interference from the macro base station, step 802 may be carried out by a method shown in Fig. 9. Referring to Fig. 9, the method includes:

step 901: judging whether a predefined increasing unicast power timer is started , if the increasing unicast power timer is not started, step 902 is carried out, otherwise step 903 is carried out;

step 902: starting the increasing unicast power timer and proceeding with receiving the interference indication information transmitted by the pico base station;

step 903: judging whether the increasing unicast power timer expires, if the increasing unicast power timer expires, step 904 is carried out, otherwise proceeding with receiving the interference indication information transmitted by the pico base station; and

step 904: increasing the transmitted power of the unicast physical channel in the almost blank subframe configured by it for the pico base station;

wherein, increasing the transmitted power may be increasing at a predefined step, and may be other known increasing manners, and this embodiment is not limited thereto.

In an embodiment, if the interference indication information indicates that the UE is subjected to intense interference from the macro base station, whether it is needed to lower the transmitted power of the unicast physical channel in the almost blank subframe configured for the pico base station may be determined in step 802 according to a predefined policy; for example, whether to lower the transmitted power of the unicast physical channel may be determined according to a load condition of itself; if its load is not heavy, the transmitted power of the unicast physical channel may be lowered; and if its load is very heavy, such as exceeding a predefined proportion or a predefined value, the transmitted power of the unicast physical channel may be kept unchanged. Of course, the determining whether to lower the transmitted power of the unicast physical channel according to the load is just an implementation mode of the embodiment of the present invention. In particular implementation, some adjustment schemes may be predefined, and the embodiment of the present invention is not limited thereto.

In this embodiment, lowering the transmitted power of the unicast physical channel may be lowering at a predefined step, and may be other known lowering manners, and this embodiment is not limited thereto.

In this embodiment, as an increasing unicast power timer may be in a started state when the interference indication information indicating that the multiple pieces of UE of the pico base station are subjected to the downlink intense interference of the macro base station is received, whether the predefined increasing unicast power timer is in a started state needs to be judged in the embodiment, and if yes, the increasing unicast power timer is closed. Wherein, the step of judgment may be executed before the step of determining whether it is needed to lower the transmitted power of the above unicast physical channel according to a predefined policy, that is, after the above interference indication information is received, and may also be executed after the step of determining whether it is needed to lower the transmitted power of the above unicast physical channel according to a predefined policy. However, the embodiment of the present invention is not limited thereto.

With the method of this embodiment, the macro base station may determine whether the UE of the pico base station is subjected to downlink intense interference from the macro base station according to the interference indication information after receiving the interference indication information transmitted by the pico base station, so as to adjust the downlink transmitted power of the unicast physical channel in the almost blank subframe configured by it for the pico base station accordingly, thereby avoiding interference brought by its downlink transmission to the pico UE, and achieving an effect of power adaptation.

An embodiment of the present invention further provides a pico base station, as described in Embodiment 7 below. As the principle of the pico base station for solving problems is similar to that of the method of Embodiment 5, the implementation of the method of Embodiment 5 may be referred to for the implementation of the pico base station, and the identical contents shall not be described any further.

Embodiment 7

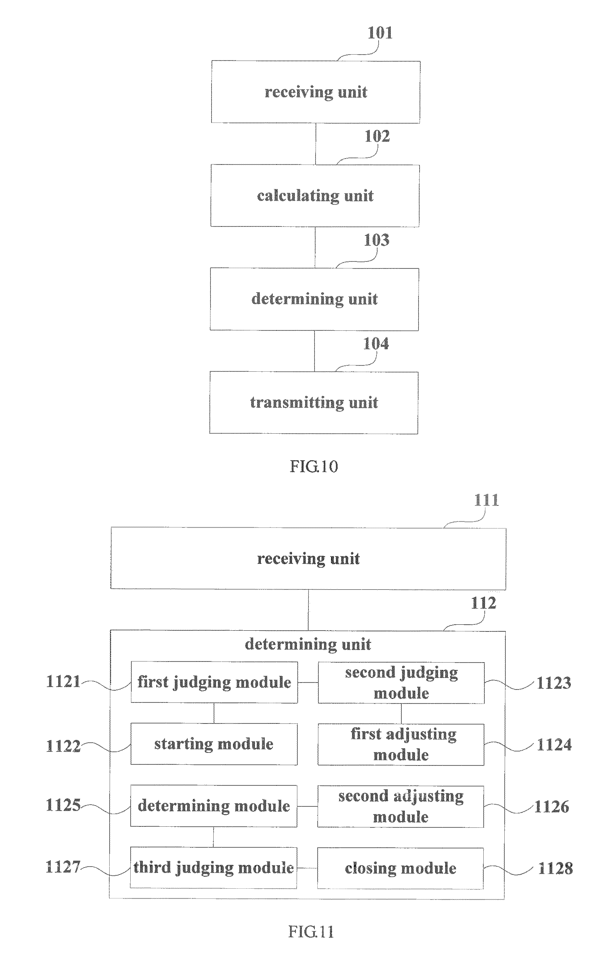

An embodiment of the present invention further provides a pico base station. Fig. 10 is a schematic diagram of the structure of the pico base station. Referring to Fig. 10, the pico base station includes:

> a receiving unit 101 configured to receive measurement values reported by multiple pieces of UE within a coverage of the pico base station, the measurement values including reference signal received quality of each piece of the UE in receiving reference signal transmitted by the pico base station;
> a calculating unit 102 configured to calculate an average value of the reference signal received quality of the UE in receiving reference signal transmitted by the pico base station according to the reference signal received quality of each piece of the UE in receiving reference signal transmitted by the pico base station;
> a determining unit 103 configured to determine whether the UE is subjected to intense interference from a macro base station according to the average value of the reference signal received quality; and
> a transmitting unit 104 configured to transmit to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information.

In an embodiment, the determining unit 103 is configured to determine that the UE is subjected to intense interference from the macro base station when the average value of the reference signal received quality of the UE in receiving reference signal transmitted by the pico base station is greater than or equal to a predefined comparative factor.

In an embodiment, the interference indication information is indicated by 1 bit information.

In an embodiment, the transmitting unit 104 transmits the interference indication information to the macro base station via a load information message of an X2 interface.

The pico base station of this embodiment judges whether the multiple pieces of UE are subjected to the intense interference from the macro base station according to the measurement values reported by the multiple pieces of UE within its coverage and the predefined comparative factor, and transmits the corresponding interference indication information to the macro base station, so that the macro base station determines the adjustment scheme of the downlink transmitted power of the unicast physical channel in the almost blank subframe configured by it for the pico base station according to the interference indication information, thereby avoiding interference brought by its downlink transmission to the pico UE, and achieving an effect of power adaptation.

An embodiment of the present invention further provides a macro base station, as described in Embodiment 8 below. As the principle of the macro base station for solving problems is similar to that of the method of Embodiment 6, the implementation of the method of Embodiment 6 may be referred to for the implementation of the macro base station, and the identical contents shall not be described any further.

Embodiment 8

An embodiment of the present invention further provides a macro base station. Fig. 11 is a schematic diagram of the structure of the macro base station. Referring to Fig. 11, the macro base station includes:

> a receiving unit 111 configured to receive interference indication information transmitted by a pico base station, the interference indication information being used for indicating whether the UE of the pico base station is subjected to intense interference from the macro base station; and
> a determining unit 112 configured to determine an adjustment scheme of transmitted power of a unicast physical channel in an almost blank subframe configured by the macro base station for the pico base station, according to the interference indication information received by the receiving unit.

In an embodiment, when the interference indication information indicates that the UE is not subjected to intense interference from the macro base station, the determining unit 112 includes:

a first judging module 1121 configured to judge whether a predefined increasing unicast power timer is started;
a starting module 1122 configured to start the increasing unicast power timer when the judgment result of the first judging module 1121 is that the predefined increasing unicast power timer is not started;
a second judging module 1123 configured to judge whether the increasing unicast power timer expires when the judgment result of the first judging module 1121 is that the predefined increasing unicast power timer is started; and
a first adjusting module 1124 configured to increase the transmitted power of the unicast physical channel in the almost blank subframe configured by the macro base station for the pico base station when the judgment result of the second judging module 1123 is that the increasing unicast power timer expires.

In another embodiment, when the interference indication information indicates that the UE is subjected to intense interference from the macro base station, the determining unit 112 includes:

a determining module 1125 configured to determine whether it is needed to lower the transmitted power of the unicast physical channel in the almost blank subframe configured by the macro base station for the pico base station according to a predefined policy; and
a second adjusting module 1126 configured to lower the transmitted power of the unicast physical channel when it is determined by the determining module 1125 that it is needed to lower the transmitted power of the unicast physical channel.

In this embodiment, the determining unit 112 further includes:

a third judging module 1127 configured to judge whether a predefined increasing unicast power timer is in a started state; and
a closing module 1128 configured to close the predefined increasing unicast power timer when the judgment result of the third judging module 1127 is yes.

In this embodiment, the manner of adjusting the transmitted power of the unicast physical channel in the almost blank subframe by the first adjusting module 1124 and the second adjusting module 1126 may be in a predefined step, and may also be in other policies, and the embodiment of the present invention is not limited thereto.
The macro base station of this embodiment determines whether the UE of the pico base station is subjected to the downlink intense interference from the macro base station according to the interference indication information after receiving the interference indication information transmitted by the pico base station, and adjusts (increase or lower) the downlink transmitted power of the unicast physical channel in the almost blank subframe configured by it for the pico base station accordingly, thereby avoiding interference brought by its downlink transmission to the pico UE, and achieving an effect of power adaptation.
An embodiment of the present invention further provides a computer-readable program, wherein when the program is executed in a base station, the program enables a computer to carry out the power adaptive method in a heterogeneous network as described in Embodiment 1 or Embodiment 2 or Embodiment 5 or Embodiment 6 in the base station.
An embodiment of the present invention further provides a storage medium in which a computer-readable program is stored, wherein the computer-readable program enables a computer to carry out the power adaptive method in a heterogeneous network as described in Embodiment 1 or Embodiment 2 or Embodiment 5 or Embodiment 6 in a base station.
The above apparatus and method of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.
The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

**Claims**

1.  A power adaptive method in a heterogeneous network, comprising:

receiving, by a pico base station, measurement values reported by multiple pieces of UE within its coverage, the measurement values including reference signal received power of each piece of the UE for receiving reference signal transmitted by the pico base station and reference signal received power of each piece of the UE for receiving reference signal transmitted by a macro base station; wherein the macro base station configures the pico base station with an almost blank subframe;

calculating, by the pico base station, an average value of data received power of the UE according to the reference signal received power of each piece of the UE for receiving reference signal transmitted by the pico base station, and an average value of the reference signal received power of the UE for receiving reference signal transmitted by the macro base station according to the reference signal received power of each piece of the UE for receiving reference signal transmitted by the macro base station; and

transmitting, by the pico base station to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station.

2. The method according claim 1, wherein the step of calculating the average value of data received power of the UE by the pico base station comprises:

calculating an average value of the reference signal received power of the UE for receiving reference signal transmitted by the pico base station according to the reference signal received power of each piece of the UE for receiving reference signal transmitted by the pico base station;

calculating an average pathloss of the UE according to the average value of the reference signal received power of the UE for receiving reference signal transmitted by the pico base station and transmitted power of common reference signal of the pico base station; and

calculating the average value of data received power of the UE according to the average pathloss of the UE and the average value of the data transmitted power of the UE.

3. A power adaptive method in a heterogeneous network, comprising:

receiving, by a macro base station, an average value of data received power of multiple pieces of UE within a coverage of a pico base station transmitted by the pico base station, and an average value of reference signal received power of the UE for receiving the reference signal transmitted by the macro base station;

calculating an average pathloss from the macro base station to edge UE of the pico base station according to the average value of the reference signal received power of the UE for receiving the reference signal transmitted by the macro base station and transmitted power of common reference signal of the macro base station; and

determining transmitted power of a unicast physical channel in an almost blank subframe configured for the pico base station according to the average pathloss from the macro base station to the edge UE of the pico base station and the average value of data received power of the UE.

4. The method according claim 3, wherein the step of determining transmitted power of a unicast physical channel in an almost blank subframe configured for the pico base station comprises:

determining maximum transmitted power of the unicast physical channel according to the following formula:

$$P_{N\_tx} \leq \overline{PL_N} + \alpha_0 \overline{P_{S\_rx}};$$

where, $P_{N\_tx}$ is the transmitted power of the unicast physical channel, $\overline{PL_N}$ is the average pathloss from the macro base station to the edge UE of the pico base station, $\overline{P_{S\_rx}}$ is the average value of data received power of the UE, and $\alpha_0$ is a predefined comparative factor.

5. A pico base station, comprising:

a receiving unit configured to receive measurement values reported by multiple pieces of UE within a coverage of the pico base station, the measurement values including reference signal received power of each piece of the UE for receiving reference signal transmitted by the pico base station and reference signal received power of each piece of the UE for receiving reference signal transmitted by a macro base station, wherein the macro base station configures the pico base station with an almost blank subframe;

a calculating unit configured to calculate an average value of data received power of the UE according to the reference signal received power of each piece of the UE for receiving reference signal transmitted by the pico base station, and calculate an average value of the reference signal received power of the UE for receiving reference signal transmitted by the macro base station according to the reference signal received power of each piece of the UE for receiving reference signal transmitted by the macro base station; and

a transmitting unit configured to transmit the average value of the data received power of the UE and the average value of the reference signal received power of the UE for receiving reference signal transmitted by the macro base station to the macro base station, so that the macro base station determines transmitted power of a unicast physical channel in the almost blank subframe configured by the macro base station for the pico base station.

6. The pico base station according to claim 5, wherein the calculating unit comprises:

a first calculating module configured to calculate an average value of the reference signal received power of the UE for receiving reference signal transmitted by the pico base station according to the reference signal received power of each piece of the UE for receiving reference signal transmitted by the pico base station;
a second calculating module configured to calculate an average pathloss of the UE according to the average value of the reference signal received power of the UE for receiving reference signal transmitted by the pico base station and transmitted power of common reference signal of the pico base station; and
a third calculating module configured to calculate the average value of data received power of the UE according to the average pathloss of the UE and the average value of the data transmitted power of the UE.

7. A macro base station, comprising:

a receiving unit configured to receive an average value of data received power of multiple pieces of UE within a coverage of a pico base station transmitted by the pico base station, and an average value of reference signal received power of the UE for receiving the reference signal transmitted by the macro base station;
a calculating unit configured to calculate an average pathloss from the macro base station to edge UE of the pico base station according to the average value of the reference signal received power of the UE for receiving the reference signal transmitted by the macro base station and transmitted power of common reference signal of the macro base station; and
a determining unit configured to determine transmitted power of a unicast physical channel in an almost blank subframe configured for the pico base station according to the average pathloss from the macro base station to the edge UE of the pico base station and the average value of data received power of the UE.

8. The macro base station according to claim 7, wherein the determining unit is configured to determine maximum transmitted power of the unicast physical channel according to the following formula:

$$P_{N\_tx} \leq \overline{PL_N} + \alpha_0 \overline{P_{S\_rx}} \,;$$

where, $P_{N\_tx}$ is the transmitted power of the unicast physical channel, $\overline{PL_N}$ is the average pathloss from the macro base station to the edge UE of the pico base station, $\overline{P_{S\_rx}}$ is the average value of data received power of the UE, and $\alpha_0$ is a predefined comparative factor.

9. A power adaptive method in a heterogeneous network, comprising:

receiving, by a pico base station, measurement values reported by multiple pieces of UE within its coverage, the measurement values including reference signal received quality of each piece of the UE in receiving reference signal transmitted by the pico base station;
calculating, by the pico base station, an average value of the reference signal received quality of the UE in receiving reference signal transmitted by the pico base station according to the reference signal received quality of each piece of the UE in receiving reference signal transmitted by the pico base station;
determining, by the pico base station, whether the UE is subjected to intense interference from a macro base station according to the average value of the reference signal received quality; and
transmitting, by the pico base station to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information.

10. The method according to claim 9, wherein the step of determining whether the UE is subjected to intense interference from the macro base station comprises:

determining that the UE is subjected to intense interference from the macro base station if the average value of the reference signal received quality of the UE in receiving reference signal transmitted by the pico base station is greater than or equal to a predefined comparative factor.

11. The method according to claim 9, wherein the interference indication information is indicated via 1 bit information.

12. The method according to claim 9 or 11, wherein the interference indication information is transmitted to the macro base station via a load information message of an X2 interface.

13. A power adaptive method in a heterogeneous network, comprising:

receiving, by a macro base station, interference indication information transmitted by a pico base station, the interference indication information being used for indicating whether multiple pieces of UE of the pico base station are subjected to intense interference from the macro base station; and
determining, by the macro base station, an adjustment scheme of transmitted power of a unicast physical channel in an almost blank subframe configured by the macro base station for the pico base station, according to the interference indication information.

14. The method according to claim 13, wherein, if the interference indication information indicates that the UE is not subjected to intense interference from the macro base station, the step of determining an adjustment scheme of transmitted power of a unicast physical channel in an almost blank subframe configured by the macro base station for the pico base station comprises:

judging whether a predefined increasing unicast power timer is started;
starting the increasing unicast power timer if the increasing unicast power timer is not started, and proceeding with receiving the interference indication information transmitted by the pico base station;
judging whether the increasing unicast power timer expires if the increasing unicast power timer is started; and
increasing the transmitted power of the unicast physical channel if the increasing unicast power timer expires, otherwise, proceeding with receiving the interference indication information transmitted by the pico base station.

15. The method according to claim 13, wherein if the interference indication information indicates that the UE is subjected to intense interference from the macro base station, the step of determining an adjustment scheme of transmitted power of a unicast physical channel in an almost blank subframe configured by the macro base station for the pico base station comprises:

determining whether it is needed to lower the transmitted power of the unicast physical channel in the almost blank subframe configured by the macro base station for the pico base station according to a predefined policy, and if yes, lowering the transmitted power of the unicast physical channel in the almost blank subframe configured by the macro base station for the pico base station.

16. The method according to claim 15, wherein before or after the step of determining whether it is needed to lower the transmitted power of the unicast physical channel in the almost blank subframe configured by the macro base station for the pico base station according to a predefined policy, the method further comprises:

judging whether a predefined increasing unicast power timer is in a started state, and if yes, closing the increasing unicast power timer.

17. A pico base station, comprising:

a receiving unit configured to receive measurement values reported by multiple pieces of UE within a coverage of the pico base station, the measurement values including reference signal received quality of each piece of the UE in receiving reference signal transmitted by the pico base station;
a calculating unit configured to calculate an average value of the reference signal received quality of the UE in receiving reference signal transmitted by the pico base station according to the reference signal received quality of each piece of the UE in receiving reference signal transmitted by the pico base station;
a determining unit configured to determine whether the UE is subjected to intense interference from a macro base station according to the average value of the reference signal received quality; and
a transmitting unit configured to transmit to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information.

18. The pico base station according to claim 17, wherein the determining unit is configured to determine that the UE is subjected to intense interference from the macro base station when the average value of the reference signal received quality of the UE in receiving reference signal transmitted by the pico base station is greater than or equal to a predefined comparative factor.

19. The pico base station according to claim 17, wherein the interference indication information is indicated via 1 bit information.

20. The pico base station according to claim 17 or 19, wherein the transmitting unit transmits the interference indication information to the macro base station via a load information message of an X2 interface.

21. A macro base station, comprising:

a receiving unit configured to receive interference indication information transmitted by a pico base station, the interference indication information being used for indicating whether multiple pieces of UE of the pico base station are subjected to intense interference from the macro base station; and
a determining unit configured to determine an adjustment scheme of transmitted power of a unicast physical channel in an almost blank subframe configured by the macro base station for the pico base station, according to the interference indication information received by the receiving unit.

22. The macro base station according to claim 21, wherein when the interference indication information indicates that the UE is not subjected to intense interference from the macro base station, the determining unit comprises:

a first judging module configured to judge whether a predefined increasing unicast power timer is started;
a starting module configured to start the increasing unicast power timer when the judgment result of the first judging module is that the predefined increasing unicast power timer is not started;
a second judging module configured to judge whether the increasing unicast power timer expires when the judgment result of the first judging module is that the predefined increasing unicast power timer is started; and
a first adjusting module configured to increase the transmitted power of the unicast physical channel in the almost blank subframe configured by the macro base station for the pico base station when the judgment result of the second judging module is that the increasing unicast power timer expires.

23. The macro base station according to claim 21, wherein when the interference indication information indicates that the UE is subjected to intense interference from the macro base station, the determining unit comprises:

a determining module configured to determine whether it is needed to lower the transmitted power of the unicast physical channel in the almost blank subframe configured by the macro base station for the pico base station according to a predefined policy; and
a second adjusting module configured to lower the transmitted power of the unicast physical channel when it is determined by the determining module that it is needed to lower the transmitted power of the unicast physical channel.

24. The macro base station according to claim 23, wherein the determining unit further comprises:

a third judging module configured to judge whether a predefined increasing unicast power timer is in a started state; and
a closing module configured to close the increasing unicast power timer when the judgment result of the third judging module is yes.

25. A computer-readable program, wherein when the program is executed in a base station, the program enables a computer to carry out the power adaptive method in a heterogeneous network as claimed in any one of claims 1-4 and 9-16 in the base station.

26. A storage medium in which a computer-readable program is stored, wherein the computer-readable program enables a computer to carry out the power adaptive method in a heterogeneous network as claimed in any one of claims 1-4 and 9-16 in a base station.

Macro cell

Macro UE

Macro eNB

Pico eNB

Pico UE

Pico cell

FIG.1

---

201

receiving, by a pico base station, measurement values reported by multiple pieces of UE within its coverage

202

calculating, by the pico base station, an average value of data received power of the UE and an average value of the reference signal received power of the UE for receiving reference signal transmitted by the macro base station according to the measurement values

203

transmitting by the pico base station to the macro base station, the average value of the data received power of the UE and the average value of the reference signal received power of the UE for receiving reference signal transmitted by the macro base station, so that the macro base station determines transmitted power of a unicast physical channel in the almost blank subframe configured by the macro base station for the pico base station

FIG.2

301

calculating an average value of the reference signal received power of these pieces of UE for receiving reference signal transmitted by the pico base station according to the reference signal received power of each piece of the UE for receiving reference signal transmitted by the pico base station

302

calculating an average pathloss of these pieces of UE according to the average value of the reference signal received power of these pieces of UE for receiving reference signal transmitted by the pico base station and transmitted power of common reference signal of the pico base station

303

calculating the average value of data received power of these pieces of UE according to the average pathloss of these pieces of UE and the average value of the data transmitted power of these pieces of UE

FIG.3

401

receiving, by a macro base station, an average value of data received power of multiple pieces of UE within a coverage of a pico base station transmitted by the pico base station, and an average value of reference signal received power of the multiple pieces of UE for receiving the reference signal transmitted by the macro base station

402

calculating an average pathloss from the macro base station to edge UE of the pico base station according to the average value of the reference signal received power of the UE for receiving the reference signal transmitted by the macro base station and transmitted power of common reference signal of the macro base station

403

determining transmitted power of a unicast physical channel in an almost blank subframe configured by the macro base station for the pico base station according to the average pathloss from the macro base station to the edge UE of the pico base station and the average value of data received power of the UE

FIG.4

51

receiving unit

52

calculating unit

first calculating
module

521

second calculating
module

522

third calculating
module

523

53

transmitting unit

FIG.5

61

receiving unit

62

calculating unit

63

transmitting unit

FIG.6

701

receiving, by a pico base station, measurement values reported by multiple pieces of UE within its coverage, the measurement values including reference signal received quality of each piece of the UE in receiving reference signal transmitted by the pico base station

702

calculating, by the pico base station, an average value of the reference signal received quality of the UE in receiving reference signal transmitted by the pico base station according to the reference signal received quality of each piece of the UE in receiving reference signal transmitted by the pico base station

703

determining, by the pico base station, whether the UE is subjected to intense interference from a macro base station according to the average value of the reference signal received quality

704

transmitting, by the pico base station to the macro base station, interference indication information indicating whether the UE is subjected to intense interference from the macro base station, so that the macro base station determines an adjustment scheme of transmitted power of a unicast physical channel in an almost blank subframe configured by the macro base station for the pico base station according to the interference indication information

FIG.7

801

receiving, by a macro base station, interference indication information transmitted by a pico base station, the interference indication information being used for indicating whether multiple pieces of UE of the pico base station are subjected to intense interference from the macro base station

802

determining, by the macro base station, an adjustment scheme of transmitted power of a unicast physical channel in an almost blank subframe configured by the macro base station for the pico base station, according to the interference indication information

FIG.8

start

receiving interference indication information transmitted by a pico base station

not subjected to the intense interference from the macro base station 901

whether a predefined increasing unicast power timer is started — no → starting the increasing unicast power timer 902

yes

whether the increasing unicast power timer expires 903 — no

yes

increasing the transmitted power of the unicast physical channel 904

end

FIG.9

FIG.10

FIG.11

**INTERNATIONAL SEARCH REPORT**

| International application No. |
| --- |
| PCT/CN2012/074449 |

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The international application claims two inventions. The first invention relates to independent claims 1, 3, 5 and 7 and dependent claims 25 and 26 citing claims 1-4, which claims a power self-adaption method in a heterogeneous network, wherein a macro base station calculates, according to the average value of the data reception power of UE and the average value of the reference signal reception power of the reference signal which is transmitted by the macro base station and received by UE, the transmission power of the unicast physical channel in the almost blank subframes configured for the pico base station by the macro base station. The second invention relates to independent claims 9, 13, 17 and 21 and dependent claims 25 and 26 citing claims 9-16, which claims a power self-adaption method in a heterogeneous network, wherein a pico base station transmits to a macro base station the interference indication information indicating whether UE bears strong interference from the macro base station, thereby the macro base station adjusts, according to the interference indication information, the transmission power of the unicast physical channel in the almost blank subframes configured for the pico base station by the macro base station. The same or corresponding technical features between the first invention and the second invention are: a power self-adaption method in a heterogeneous network; the pico base station receives the measurement values reported by the multiple user equipments in the range covered by the pico base station; the macro base station configures the almost blank subframes for the pico base station. However, the above technical features are common technical means for the person skilled in the art. Therefore, independent claims 1, 3, 5 and 7 and dependent claims 25 and 26 citing claims 1-4, and independent claims 9, 13, 17 and 21 and dependent claims 25 and 26 citing claims 9-16, do not have the same or corresponding special technical features which make a contribution over the prior art, and thus do not meet the requirements of the unity of invention as defined in PCT Rules 13.1.

1. ☐   As all required additional search fees were timely paid by the applicant, this international search report covers all searchable claims.

2. ☐   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☒   No required additional search fees were timely paid by the applicant. Consequently, this international search report is restricted to the invention first mentioned in the claims; it is covered by claims Nos.: 1-8, 25 and 26 citing claims 1-4.

**Remark on protest**        ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet (2)) (July 2009)

<h1 align="center">INTERNATIONAL SEARCH REPORT</h1>

| International application No. |
| --- |
| PCT/CN2012/074449 |

### A. CLASSIFICATION OF SUBJECT MATTER

H04W 16/00 (2009.01) i

According to International Patent Classification (IPC) or to both national classification and IPC

### B. FIELDS SEARCHED

Minimum documentation searched (classification system followed by classification symbols)

IPC: H04L; H04W; H04Q

Documentation searched other than minimum documentation to the extent that such documents are included in the fields searched

Electronic data base consulted during the international search (name of data base and, where practicable, search terms used)

CPRSABS, CNTXT, VEN, USTXT, EPTXT, WOTXT, GOOGLE, CNKI: heterogeneous network, almost blank subframe, ABS, reference signal rece+ power, RSRP, power

### C. DOCUMENTS CONSIDERED TO BE RELEVANT

| Category* | Citation of document, with indication, where appropriate, of the relevant passages | Relevant to claim No. |
| --- | --- | --- |
| A | CN 102149100 A (UNIV SOUTHEAST) 10 August 2011 (10.08.2011) the whole document | 1-8, 25-26 |
| A | CN 101986586 A (ZTE CORP.) 16 March 2011 (16.03.2011) the whole document | 1-8, 25-26 |
| A | WO 2012045272 A1 (HUAWEI TECH CO LTD et al.) 12 April 2012 (12.04.2012) the whole document | 1-8, 25-26 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 December 2012 (04.12.2012) | 31 January 2013 (31.01.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer YU, Ruifu Telephone No. (86-10)62411248 |
| --- | --- |

Form PCT/ISA/210 (second sheet) (July 2009)

**INTERNATIONAL SEARCH REPORT**
Information on patent family members

| | International application No. |
|---|---|
| | PCT/CN2012/074449 |

| Patent Documents referred in the Report | Publication Date | Patent Family | Publication Date |
|---|---|---|---|
| CN 102149100 A | 10.08.2011 | None | |
| CN 101986586 A | 16.03.2011 | None | |
| WO 2012045272 A1 | 12.04.2012 | US 2012082052 A1 | 05.04.2012 |
| | | CN 102640527 A | 15.08.2012 |

Form PCT/ISA /210 (patent family annex) (July 2009)